# EUROPEAN PATENT APPLICATION

(11) **EP 4 729 236 A2**
(43) Date of publication of application: **22.04.2026**
(21) Application number: 25209558.3
(22) Date of filing: 17.10.2025
(51) Int. Cl.: B25B 13/52, B25B 23/00

(54) **ANTI-ROTATION TOOL FOR AIRCRAFT ENGINE ROTATIONAL EQUIPMENT**

(30) Priority: 17.10.2024 US 202418918632
(71) Applicant: PRATT & WHITNEY CANADA CORP., Longueuil, Québec J4G 1A1 (CA)
(72) Inventor: AUSTIN, Christopher, (01BE5) Longueuil, J4G 1A1 (CA); RICHARD, Darren, (01BE5) Longueuil, J4G 1A1 (CA)
(74) Representative: Dehns

(57) **Abstract**

An anti-rotation tool (100) includes a shaft (102), a head (104), a roller band (106), and a locking device (108). The head (104) is disposed at the shaft (102). The head (104) forms a cradle (130). The cradle (130) forms a component mating surface (132). The roller band (106) extends between and to a proximal band end (138) and a distal band end (140). The proximal band end (138) is fixedly mounted to the head (104). The roller band (106) includes a first lateral chain (146), a second lateral chain (148), a plurality of pins (150), and a plurality of rollers (152). Each of the plurality of pins (150) extends between and to the first lateral chain (146) and the second lateral chain (148). Each of the plurality of rollers (152) is rotatably mounted on a respective one of the plurality of pins (150). The plurality of rollers (152) form a component mating interface (162). The locking device (108) is positionable in a locked condition or an unlocked condition with the roller band (106).

## Description

### TECHNICAL FIELD

This disclosure relates to anti-rotation tools for aircraft engine rotational equipment.

### BACKGROUND OF THE ART

Rotational equipment, such as those typically found in an engine for an aircraft propulsion system, may typically include a plurality of rotational equipment components. During execution of maintenance or other operating procedures for rotational equipment, it may be necessary to install or remove test equipment, mechanical fasteners, or mechanical elements on or from these rotational equipment components. Various tools, systems, and methods for executing these installation and removal steps are known in the art. While these known tools, systems, and methods may be suitable for their intended purposes, there is always room in the art for improvement.

### SUMMARY

It should be understood that any or all of the features or embodiments described herein can be used or combined in any combination with each and every other feature or embodiment described herein unless expressly noted otherwise.

According to an aspect of the present disclosure, an anti-rotation tool includes a shaft, a head, a roller band, and a locking device. The shaft extends between and to a proximal shaft end and a distal shaft end. The head extends between and to an inner head end and an outer head end. The inner head end is disposed at the proximal shaft end. The head forms a cradle along the outer head end. The cradle forms a component mating surface. The roller band extends between and to a proximal band end and a distal band end. The proximal band end is fixedly mounted to the head. The roller band includes a first lateral chain, a second lateral chain, a plurality of pins, and a plurality of rollers. The plurality of pins are distributed along the roller band from the proximal band end to the distal band end. Each of the plurality of pins extends between and to the first lateral chain and the second lateral chain. Each of the plurality of rollers is rotatably mounted on a respective one of the plurality of pins between the first lateral chain and the second lateral chain. The plurality of rollers form a component mating interface. The locking device is positionable in a locked condition or an unlocked condition with the roller band. The locking device in the locked condition fixes a portion of the roller band between the proximal band end and the distal band end.

In any of the aspects or embodiments described above and herein, each of the plurality of pins may extend laterally between and to a first lateral end and a second lateral end, the first lateral end may be disposed laterally outside of the first lateral chain, the second lateral end may be disposed laterally outside of the second lateral chain, and the locking device may include a hook operable to engage a selected one of the plurality of pins at the first lateral end and the second lateral end.

In any of the aspects or embodiments described above and herein, the hook may be pivotably mounted to the shaft.

In any of the aspects or embodiments described above and herein, the shaft may have a length between the proximal shaft end and the distal shaft end, and the shaft may be adjustable to selectively vary the length.

In any of the aspects or embodiments described above and herein, the head may include a resilient material liner forming the mating surface.

In any of the aspects or embodiments described above and herein, the mating surface may be a concave surface.

In any of the aspects or embodiments described above and herein, each of the plurality of rollers may include a resilient roller material.

In any of the aspects or embodiments described above and herein, the anti-rotation tool may further include a friction arm, the friction arm may extend between and to a proximal arm end and a distal arm end, the proximal arm end may be pivotably mounted to the head, the friction arm may be pivotable between an engaged position and a retracted position, the distal arm end may contact the roller band in the engaged position of the friction arm, and the friction arm may be separated from the roller band in the retracted position of the friction arm.

According to another aspect of the present disclosure, a system for preventing rotation of a first rotational equipment component of an aircraft engine includes the first rotational equipment component, a second rotational equipment component, and an anti-rotation tool. The first rotational equipment component is mounted for rotation about a rotational axis. The second rotational equipment component is mounted on the first rotational equipment component. The second rotational equipment component is axially adjacent the first rotational equipment component. The second rotational equipment component is mounted to the first rotational equipment component by a plurality of mechanical fasteners to form a rotational assembly of the first rotational equipment component and the second rotational equipment component. The anti-rotation tool includes a shaft and a head. The shaft extends along a shaft axis between and to a proximal shaft end and a distal shaft end. The head is fixedly coupled with the rotational assembly with the shaft axis oriented orthogonal to the rotational axis. The shaft is rotationally fixed relative to the rotational axis.

In any of the aspects or embodiments described above and herein, the anti-rotation tool further may further include a roller band and a locking device, the roller band may extend between and to a proximal band end and a distal band end, the proximal band end may be fixedly mounted to the head, the roller band may include a first lateral chain, a second lateral chain, a plurality of pins, and a plurality of rollers, the plurality of pins may be distributed along the roller band from the proximal band end to the distal band end, each of the plurality of pins may extend between and to the first lateral chain and the second lateral chain, each of the plurality of rollers may be rotatably mounted on a respective one of the plurality of pins between the first lateral chain and the second lateral chain, the plurality of rollers may form a component mating interface in contact with the rotational assembly, and the locking device may be positioned in a locked condition with the roller band such that the rotational assembly is disposed between and contacting the component mating interface and the head.

In any of the aspects or embodiments described above and herein, the head may form a first flange facing surface and a plurality of pin slots extending through the first flange facing surface, the first flange facing surface may be oriented orthogonal to a flange axis, the plurality of pin slots may be distributed circumferentially about the flange axis, the first flange facing surface may be disposed on a second flange facing surface of the rotational assembly, the anti-rotation tool may further include a plurality of pin assemblies, each of the plurality of pin assemblies may include a pin and a spring, the pin may be disposed within a respective one of the plurality of pin slots, the pin may be axially translatable within the respective one of the plurality of pin slots with respect to the flange axis, the spring may be positioned between the pin and the head and configured to bias the pin axially outward from the head at the first flange facing surface, and the pin of each of the pin assemblies may be engaged with the rotational assembly at the second flange facing surface.

In any of the aspects or embodiments described above and herein, the head may include a head body and a flap, the head body may extend along the shaft axis between and to a proximal head end and a distal head end, the proximal head end may be disposed at the shaft, the head body may include a first lateral panel and a second lateral panel extending between and to the proximal head end and the distal head end, the first lateral panel may diverge radially outward from the shaft axis in a direction from the proximal head end to the distal head end, the second lateral panel may include a plurality of stepped axial portions, each of the plurality of stepped axial portions may diverge radially outward from the shaft axis in the direction from the proximal head end to the distal head end, the flap may extend between and to a first flap end and a second flap end, the first flap end may be pivotably mounted to the first lateral panel at the distal head end, and the flap may be operable to contact the second lateral panel at the second flap end.

In any of the aspects or embodiments described above and herein, the shaft may be positioned in contact with a ground rotationally fixing the shaft relative to the rotational axis.

In any of the aspects or embodiments described above and herein, the first rotational equipment component may be an output shaft of the aircraft engine, the output shaft may include an output shaft flange, the second rotational equipment component may be a dynamometer adapter, the dynamometer adapter may include an adapter flange disposed axially adjacent the output shaft flange relative to the rotational axis, and the plurality of mechanical fasteners may couple the output shaft flange with the adapter flange.

In any of the aspects or embodiments described above and herein, the first rotational equipment component may be a propulsor rotor of the aircraft engine, the second rotational equipment component may be a nose cone, the nose cone may be disposed axially adjacent the propulsor rotor relative to the rotational axis, and the plurality of mechanical fasteners may couple the nose cone with the propulsor rotor.

According to another aspect of the present disclosure, a method for applying a counter moment force to a freely-rotatable component installed on an aircraft engine while installing or removing a threaded mechanical fastener from the freely-rotatable component includes installing an anti-rotation tool on the freely-rotatable component rotatable about a rotational axis with a head of the anti-rotation tool fixedly coupled with the freely-rotatable component, rotationally fixing the anti-rotation tool relative to the rotational axis by positionally fixing a shaft of the anti-rotation tool connected to the head, and applying a counter moment force to the freely-rotatable component with the anti-rotation tool, rotationally fixed relative to the rotational axis, while installing or removing the threaded mechanical fastener from the freely-rotatable component by rotating the threaded mechanical fastener about a fastener axis substantially parallel to the rotational axis.

In any of the aspects or embodiments described above and herein, the shaft may extend along a shaft axis between a proximal shaft end and a distal shaft end, the proximal shaft end may be disposed at the head, and the shaft axis may be orthogonal to the rotational axis.

In any of the aspects or embodiments described above and herein, the shaft may have a length between the proximal shaft end and the distal shaft end, and the shaft may be adjustable to selectively vary the length.

In any of the aspects or embodiments described above and herein, rotationally fixing the anti-rotation tool relative to the rotational axis by positionally fixing the shaft may include increasing the length to position the distal shaft end in fixed contact with a ground.

In any of the aspects or embodiments described above and herein, the freely-rotatable component may be an engine shaft of the aircraft engine.

The present disclosure, and all its aspects, embodiments and advantages associated therewith will become more readily apparent in view of the detailed description provided below, including the accompanying drawings.

### DESCRIPTION OF THE DRAWINGS

FIG. 1 illustrates an aircraft including a propulsion system, in accordance with one or more embodiments of the present disclosure.
FIG. 2 schematically illustrates a cutaway, side view of an aircraft propulsion system, in accordance with one or more embodiments of the present disclosure.
FIG. 3 schematically illustrates a side view of a dynamometer system for installation on an engine of an aircraft propulsion system, in accordance with one or more embodiments of the present disclosure.
FIG. 4 schematically illustrates a side view of a fan of an aircraft propulsion system, in accordance with one or more embodiments of the present disclosure.
FIG. 5 schematically illustrates a cutaway, side view of an anti-rotation tool, in accordance with one or more embodiments of the present disclosure.
FIG. 6 schematically illustrates a portion of a roller band for the anti-rotation tool of FIG. 5, in accordance with one or more embodiments of the present disclosure.
FIG. 7 schematically illustrates a front view of another anti-rotation tool, in accordance with one or more embodiments of the present disclosure.
FIG. 8 schematically illustrates a cutaway, side view of the anti-rotation tool of FIG. 7, in accordance with one or more embodiments of the present disclosure.
FIG. 9 schematically illustrates a side view of another anti-rotation tool, in accordance with one or more embodiments of the present disclosure.
FIG. 10 schematically illustrates a system including an aircraft propulsion system engine, a dynamometer adapter, and an anti-rotation tool, in accordance with one or more embodiments of the present disclosure.

### DETAILED DESCRIPTION

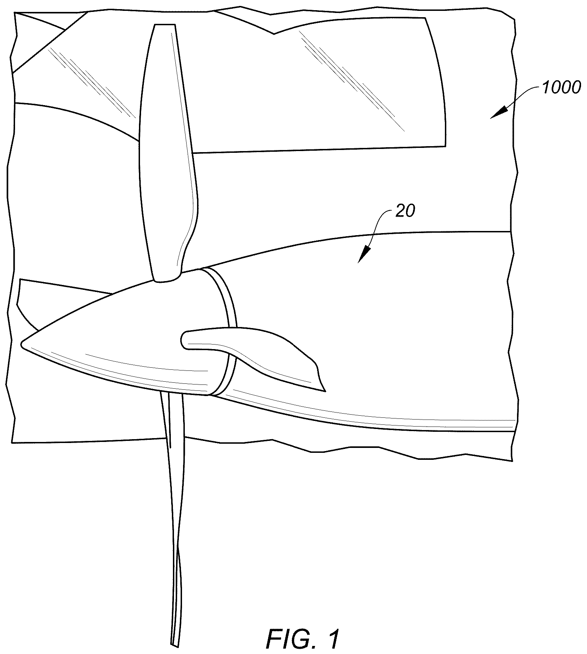

FIG. 1 illustrates an aircraft including a propulsion system 20. Briefly, the aircraft may be a fixed-wing aircraft (e.g., an airplane), a rotary-wing aircraft (e.g., a helicopter), a tilt-rotor aircraft, a tilt-wing aircraft, or another aerial vehicle. Moreover, the aircraft may be a manned aerial vehicle or an unmanned aerial vehicle (UAV, e.g., a drone).

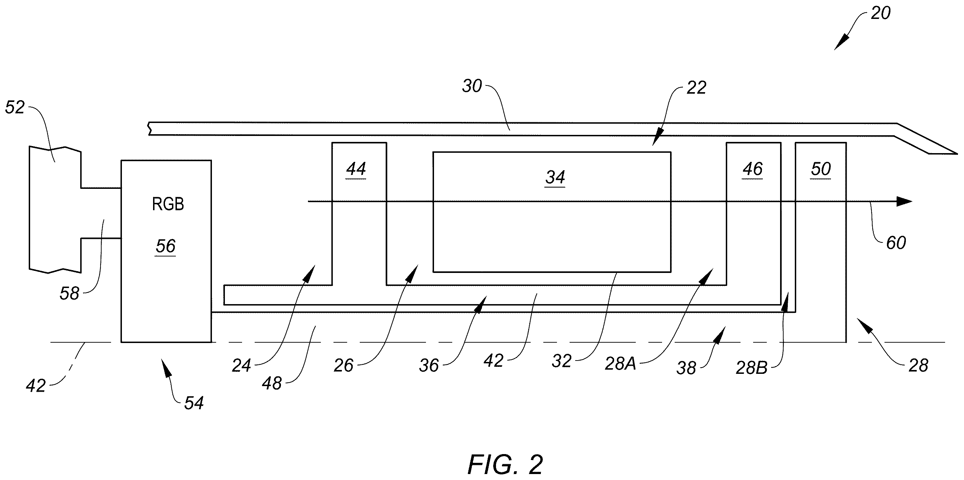

FIG. 2 schematically illustrates a cutaway, side view of an exemplary configuration of the propulsion system 20. The propulsion system 20 of FIG. 2 includes an engine 22. The engine 22 is configured as a gas turbine engine. In particular, the engine 22 is configured as a turboprop gas turbine engine. However, the present disclosure is not limited to any particular configuration of gas turbine engine for the propulsion system 20, and examples of gas turbine engine configurations for the propulsion system 20 may include, but are not limited to, a turbofan engine, a turbojet engine, a propfan engine, or the like.

The engine 22 of FIG. 2 includes a compressor section 24, a combustor section 26, a turbine section 28, and an engine static structure 30. The combustor section 26 includes a combustor 32 (e.g., an annular combustor) forming a combustion chamber 34. The turbine section 28 includes a high-pressure turbine section 28A and a power turbine section 28B.

Rotational components of the engine 22 of FIG. 2 (e.g., the compressor section 24 and/or the turbine section 28) form a first rotational assembly 36 (e.g., a high-pressure spool) and a second rotational assembly 38 of the engine 22. The first rotational assembly 36 and the second rotational assembly 38 are mounted for rotation about a rotational axis 40 (e.g., an axial centerline) of the engine 22 relative to the engine static structure 30.

The first rotational assembly 36 includes a first shaft 42, a bladed compressor rotor 44 for the compressor section 24, and a bladed first turbine rotor 46 for the high-pressure turbine section 28A. The first shaft 42 interconnects the bladed compressor rotor 44 and the bladed first turbine rotor 46.

The second rotational assembly 38 includes a second shaft 48 and a bladed second turbine rotor 50 for the power turbine section 28B. The second shaft 48 is connected to the bladed second turbine rotor 50. The second shaft 48 operably connects (e.g., directly or indirectly connects) the bladed second turbine rotor 50 with a propulsor 52 of the propulsion system 20. As shown in FIG. 2, for example, the second shaft 48 may be coupled with the propulsor 52 by a gear train 54. The gear train 54 includes a gear box 56 (e.g., a reduction gear box (RGB)). The gear box 56 includes an output shaft 58 coupled with the propulsor 52 (e.g., an input shaft of the propulsor 52).

The engine static structure 30 includes engine casings, cowlings, and other fixed (e.g., non-rotating) structures of the engine 22 which house and/or support components of the engine 22 such as, but not limited to, those of the compressor section 24, the combustor section 26, and the turbine section 28. The engine static structure 30 may further include one or more bearing assemblies configured to rotationally support components of the first rotational assembly 36 and the second rotational assembly 38.

During operation of the propulsion system 20 of FIG. 2, ambient air enters the propulsion system 20 through an air intake into and through a core flow path 60 of the engine 22. The ambient air flow along the core flow path 60 is compressed in the compressor section 24 and directed into the combustion chamber 34 of the combustor 32 within the combustor section 26. Fuel is injected into the combustion chamber 34 and mixed with the compressed air to provide a fuel-air mixture. This fuel-air mixture is ignited, and combustion products thereof flow through the high-pressure turbine section 28A and the power turbine section 28B and are exhausted from the propulsion system 20. The bladed first turbine rotor 46 and the bladed second turbine rotor 50 rotationally drive the first rotational assembly 36 and the second rotational assembly 38, respectively, in response to the combustion gas flow through the high-pressure turbine section 28A and the power turbine section 28B. Rotation of the second rotational assembly 38 drives rotation of the propulsor 52, for example, through the gear train 54.

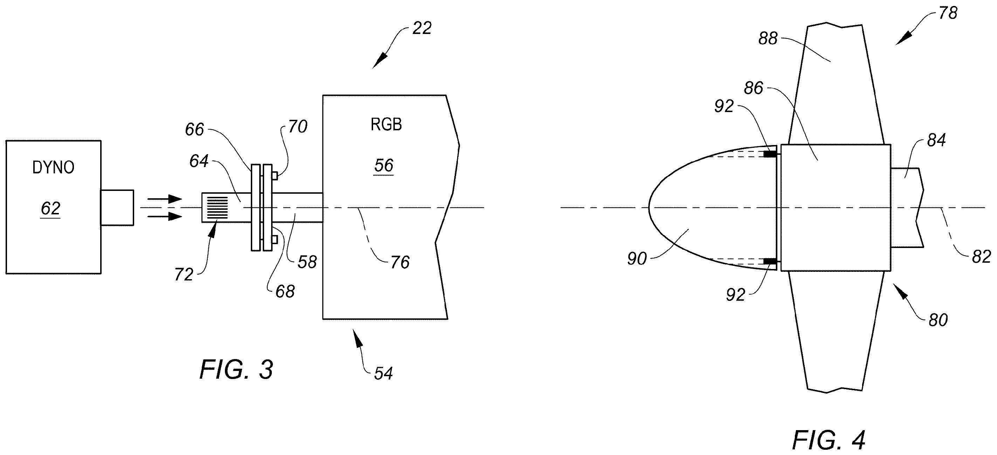

During some maintenance, testing, inspection, or overhaul procedures for an engine, such as the engine 22, it may be necessary to install or remove one or more threaded mechanical fasteners (e.g., bolts) from a freely-rotatable equipment (e.g., rotatable components or component assemblies) of the engine. The term "freely-rotatable" may be understood to refer to a state of rotational equipment in which the rotational equipment may be manually rotated by hand or use of hand tools on the equipment (e.g., during a shutdown condition of the engine 22). In such cases, it may be necessary apply a counter-moment force to the freely-rotatable component, while installing or removing said mechanical fasteners, to prevent the freely-rotatable component from spinning. For example, threaded mechanical fasteners having a rotational axis parallel to or substantially parallel to a rotational axis of the freely-rotatable component may impart a rotational force on the rotational component when threaded (e.g., installed or removed). FIGS. 3 and 4 illustrate non-limiting examples of rotational equipment and associated procedures which may benefit from aspects of the present disclosure.

FIG. 3 schematically illustrates a portion of the engine 22 showing the gear train 54, the gear box 56, and the output shaft 58. During some maintenance, testing, inspection, or overhaul procedures, a dynamometer 62 (sometimes "dyno") may be installed on the engine 22 (e.g., the output shaft 58) to drive rotation of the first rotational assembly 36, the second rotational assembly 38, and/or the gear train 54 independent of a typical combustion operation of the engine 22 (see FIG. 2). The dynamometer 62 of FIG. 3 is coupled with the output shaft 58 (e.g., a freely-rotatable component) by an adapter 64. For example, a flange 66 of the adapter 64 may be coupled with a counterpart flange 68 of the output shaft 58 by a plurality of bolts 70. A splined interface 72 or other attachment interface of the adapter 64 may then be coupled with a rotor 74 of the dynamometer 62 to facilitate rotation of the output shaft 58 about a rotational axis 76 driven by the dynamometer 62. Similar to that discussed above, installation or removal of the bolts 70 from the flanges 66, 68 may include applying a counter-moment force to the assembly of the output shaft 58 and the adapter 64. This counter-moment force may be applied by the dynamometer 62. However, use of the dynamometer 62 to prevent rotation of assembly of the output shaft 58 and the adapter 64 may be inefficient and may present ergonomic and/or safety hazards as the dynamometer 62 may complicate access (e.g., by a technician) to the flanges 66, 68 and the bolts 70; particularly, where the engine 22 is installed within a test chamber. FIG. 4 schematically illustrates a portion of a turbofan gas turbine engine 78 for an aircraft propulsion system. The engine 78 includes a fan 80 (e.g., a freely-rotatable component) configured to be driven for rotation about a rotational axis 82 by a shaft 84 of the engine 78. The fan 80 includes a fan disk 86, a plurality of fan blades 88, and a nose cone 90. The fan blades 88 are mounted to and circumferentially distributed about the fan disk 86. For example, each of the fan blades 88 may be mounted within a respective slot (e.g., a dovetail slot) formed by the fan disk 86. The nose cone 90 is mounted at (e.g., on, adjacent, or proximate) an axial end of the fan disk 86. For example, the nose cone 90 of FIG. 4 is mounted to the fan disk 86 by a plurality of bolts 92. During some maintenance, testing, inspection, or overhaul procedures, the nose cone 90 may be removed from the fan disk 86. For example, the nose cone 90 may be removed to facilitate lubrication of interface joints (e.g., dovetail joints) between the fan blades 88 and the fan disk 86. The fan blades 88 may be held by hand (e.g., by a technician) to prevent rotation of the fan 80 while installing or removing the bolts 92. However, handling the fan blades 88 in this manner may cause or increase the likelihood of contamination of the fan blades 88, thereby potentially causing corrosive damage that can lead to premature failure of the fan blades 88.

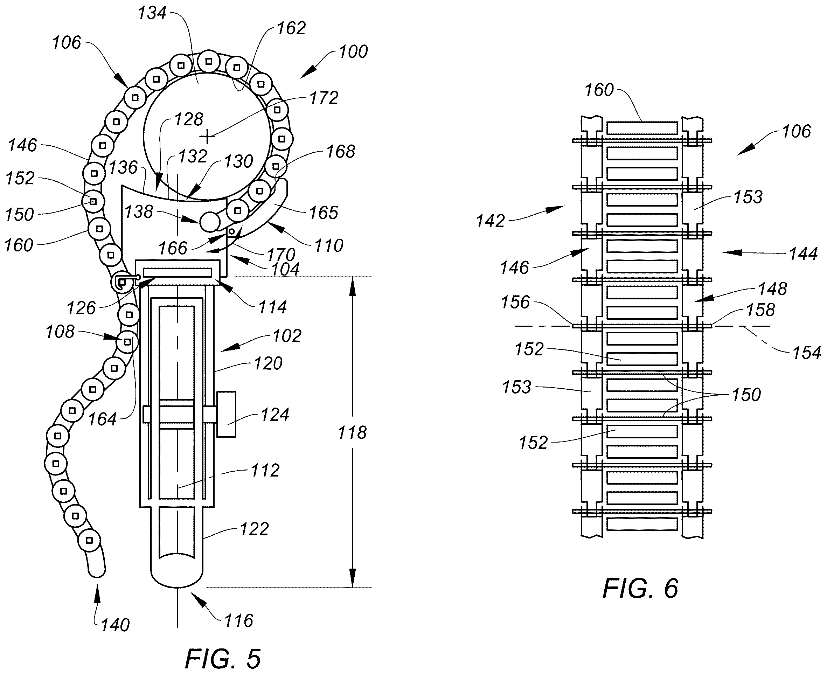

FIGS. 5 and 6 schematically illustrate an anti-rotation tool 100. The anti-rotation tool 100 may be used to apply a counter-moment force to rotational equipment to facilitate maintenance, testing, inspection, or overhaul procedures such as, but not limited to, those described above. The anti-rotation tool 100 of FIGS. 5 and 6 includes a shaft 102, a head 104, a roller band 106, and a locking device 108. The anti-rotation tool 100 may further include a friction arm 110.

The shaft 102 extends along an axis 112 of the anti-rotation tool 100 between and to a proximal axial end 114 of the shaft 102 and a distal axial end 116 of the shaft 102. The shaft 102 has a length 118 extending between and to the proximal axial end 114 and the distal axial end 116. In some embodiments, the shaft 102 may include a first shaft portion 120 and a second shaft portion 122. The second shaft portion 122 may be axially moveable relative to the first shaft portion 120 to selectively vary the length 118. As shown in FIG. 5, for example, the second shaft portion 122 may be concentrically disposed within the first shaft portion 120 and axially moveable within the first shaft portion 120 to selectively vary the length 118. The shaft 102 may include a locking pin 124 or other mechanical retention feature configured to axially fix the second shaft portion 122 relative to the first shaft portion 120.

The head 104 extends between and to an inner end 126 of the head 104 and an outer end 128 of the head 104 along the axis 112. The inner end 126 is disposed at (e.g., on, adjacent, or proximate) the proximal axial end 114. For example, the head 104 may be fixedly mounted to the shaft 102 at (e.g., on, adjacent, or proximate) the inner end 126. The head 104 may be formed as a unitary component with the shaft 102 (e.g., the first shaft portion 120). The head 104 may alternatively be configured for selective attachment to the shaft 102 to facilitate installation of different configurations of the head 104, for example, to accommodate different shapes, sizes, and configurations of rotational equipment. The head 104 forms a cradle 130 along the outer end 128. The cradle 130 forms a mating surface 132 configured for engagement with a rotational equipment component 134. The mating surface 132 may be formed with a concave orientation facing outward from the head 104. The head 104 may include a resilient material liner 136 forming all or a substantial portion of the mating surface 132 to facilitate improved grip on the rotational equipment component 134. The resilient material liner 136 may include a resilient material such as a dense rubber or other elastomeric material.

The roller band 106 extends between and to a proximal end 138 of the roller band 106 and a distal end 140 of the roller band 106. The roller band 106 extends laterally between and to a first lateral side 142 of the roller band 106 and a second lateral side 144 of the roller band 106. The roller band 106 is fixedly attached to the head 104 at (e.g., on, adjacent, or proximate) the proximal end 138. The roller band 106 of FIGS. 5 and 6 includes a first lateral chain 146, a second lateral chain 148, a plurality of pins 150, and a plurality of rollers 152.

The first lateral chain 146 extends along the first lateral side 142 between the proximal end 138 and the distal end 140. The second lateral chain 148 extends along the second lateral side 144 between the proximal end 138 and the distal end 140. Each of the first lateral chain 146 and the second lateral chain 148 includes a plurality of chain links 153 pivotably interconnected to form the first lateral chain 146 and the second lateral chain 148.

Each of the pins 150 extends laterally through the roller band 106 along a respective pin axis 154. Each of the pins 150 extends its pin axis 154 between and to a first lateral end 156 of the respective one of the pins 150 and a second lateral end 158 of the respective one of the pins 150. Each of the pins 150 extends through and is supported by the first lateral chain 146 and the second lateral chain 148. As shown in FIG. 6, the first lateral end 156 and the second lateral end 158 may be disposed laterally outward of the first lateral chain 146 and the second lateral chain 148, respectively.

Each of the rollers 152 is a cylindrical or substantially cylindrical body. Each of the rollers 152 is rotatably mounted on a respective one of the pins 150 laterally between the first lateral chain 146 and the second lateral chain 148. Each of the rollers 152 includes a roller body material forming all or a substantial portion of the rollers 152. The roller body material is a resilient material such as, but not limited to, a dense rubber or other elastomeric material. Each of the rollers 152 includes an outer diameter surface 160 forming a portion of a mating interface 162 of the roller band 106 for the rotational equipment component 134. Each of the rollers 152 has a sufficiently large diameter such that at least a portion of the outer diameter surface 160 is disposed radially outside of the first lateral chain 146 and the second lateral chain 148, relative to the pin axis 154.

The locking device 108 is configured to selectively engage the roller band 106 to adjust a tension of the roller band 106 on the rotational equipment component 134. The locking device 108 of FIG. 5 is disposed on the shaft 102; however, the locking device 108 may alternatively be disposed on the head 104. The locking device 108 of FIG. 5 includes a hook 164 pivotably mounted to the shaft 102. The hook 164 is configured to selectively engage the pins 150 (e.g., one of the pins 150) to restrict a position and/or tension of the roller band 106. For example, the hook 164 may be configured to engage the portions of the pins 150 disposed laterally outside of the first lateral chain 146 and the second lateral chain 148.

The friction arm 110 includes an arcuate arm body 165 extending between and to a proximal end 166 of the arm body 165 and a distal end 168 of the arm body 165. The arm body 165 is pivotably mounted to the head 104 at a pivot axis. The friction arm 110 is pivotable in a pivot direction 170 between an engaged position (shown in FIG. 6) and a retracted position. In the retracted position, the friction arm 110 may be separated from the roller band 106. In the engaged position, the friction arm 110 may be positioned in contact with the roller band 106. For example, the distal end 168 may be positioned abutting one of the rollers 152 thereby pushing the roller band 106 against the rotational equipment component 134 and increasing tension of the roller band 106 on the rotational equipment component 134.

In operation to apply a counter-moment force to the rotational equipment component 134, the roller band 106 is applied circumferentially about the rotational equipment component 134 relative to a rotational axis 172 of the rotational equipment component 134. The roller band 106 is pulled against the rotational equipment component 134 to tightly position the rotational equipment component 134 between the roller band 106 (e.g., the mating interface 162) and the head 104 (e.g., the mating surface 132). The rollers 152 facilitate movement of the roller band 106 on the rotational equipment component 134 as the tension of the roller band 106 is increased and until sufficient tension is applied to the rotational equipment component 134 with the roller band 106. The friction arm 110 may be pivoted to its engaged position to further increase tension of the roller band 106 on the rotational equipment component 134. Once the anti-rotation tool 100 has been securely engaged with the rotational equipment component 134 the anti-rotation tool 100 may be restrained while mechanical fasteners (see FIGS. 3 and 4) of the rotational equipment component 134 are installed or removed, as will be discussed in further detail.

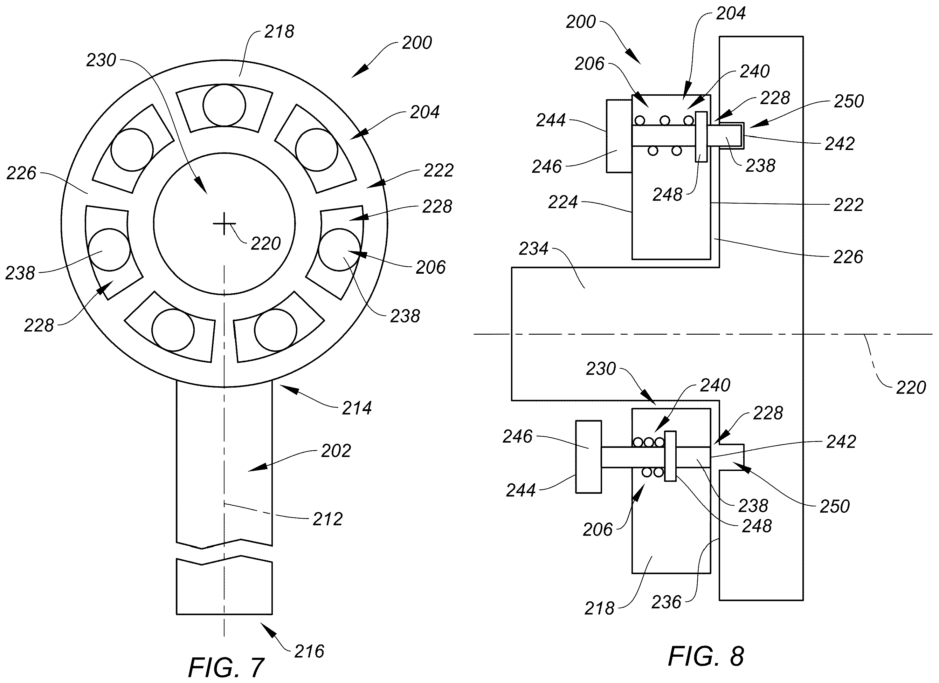

FIGS. 7 and 8 schematically illustrate another anti-rotation tool 200. The anti-rotation tool 200 may be used to apply a counter-moment force to rotational equipment to facilitate maintenance, testing, inspection, or overhaul procedures such as, but not limited to, those described above. The anti-rotation tool 200 of FIGS. 7 and 8 includes a shaft 202, a head 204, and a plurality of pin assemblies 206.

The shaft 202 extends along an axis 212 of the anti-rotation tool 200 between and to a proximal axial end 214 of the shaft 202 and a distal axial end 216 of the shaft 202. The shaft 202 may be the same as or similar to the shaft 102 (see FIG. 5) described above and, for the sake of brevity, will not be further described.

The head 204 includes a head body 218. The head body 218 is disposed at (e.g., on, adjacent, or proximate) the proximal axial end 214. The head body 218 may be fixedly mounted to the shaft 202. The head body 218 may be formed as a unitary component with the shaft 202. The head body 218 may alternatively be configured for selective attachment to the shaft 202 to facilitate installation of different configurations of the head 204, for example, to accommodate different shapes, sizes, and configurations of rotational equipment. The head body 218 extends (e.g., axially extends) along an axis 220 of the head 204 between and to a first axial end 222 of the head body 218 and a second axial end 224 of the head body 218. The axis 220 may be oriented orthogonal or substantially orthogonal to the axis 212. The head body 218 forms a flange facing surface 226 on the first axial end 222. The flange facing surface 226 is arranged circumferentially about the axis 220. The flange facing surface 226 may be oriented orthogonal or substantially orthogonal to the axis 220. The flange facing surface 226 is configured to be mated with a rotational equipment component 234, for example, a flange facing surface 236 or other mating surface of the rotational equipment component 234. The head body 218 forms a plurality of pin slots 228 extending through the flange facing surface 226. The pin slots 228 are circumferentially distributed about the axis 220 (e.g., at a same radial position). The head body 218 may additionally form a center aperture 230 extending through the flange facing surface 226 on and along the axis 220. The center aperture 230 may accommodate center projections of the rotational equipment component 234 such as, for example, the splined interface 72 of the adapter 64 (see FIG. 3).

The pin assemblies 206 are mounted on the head 204. Each of the pin assemblies 206 includes a pin 238 and a spring 240. The pin 238 extends axially, relative to the axis 220, between and to a first axial end 242 of the pin 238 and a second axial end 244 of the pin 238. The pin 238 extends axially through the head body 218 within a respective one of the pin slots 228. The first axial end 242 is disposed at (e.g., on, adjacent, or proximate) the first axial end 222. The second axial end 244 is disposed at (e.g., on, adjacent, or proximate) the second axial end 224. The pin 238 includes a handle 246 and an axial-retention member 248. The handle 246 is disposed at (e.g., on, adjacent, or proximate) the second axial end 244 and outside of the head body 218. The axial-retention member 248 may be a ring or other projection of the pin 238 which projects outward (e.g., radially outward) from surrounding portions of the pin 238. The axial-retention member 248 may be disposed at an intermediate axial position of the pin 238 between the first axial end 242 and the second axial end 244. The axial-retention member 248 is disposed within the head body 218. The pin 238 may include threading at (e.g., on, adjacent, or proximate) the first axial end 242, for example, to facilitate threaded engagement of the pin 238 with the rotational equipment component 234. The present disclosure, however, is not limited to threading or any other particular engagement interface of the pin 238. The spring 240 is positioned between the pin 238 and the head body 218 to axially bias the pin 238 in a direction from the second axial end 224 toward the first axial end 222. For example, the spring 240 may be positioned between (e.g., axially restrained between) the axial-retention member 248 and the head body 218 at (e.g., on, adjacent, or proximate) the second axial end 224. The pin 238 is moveable within its respective one of the pin slots 228. In particular, the pin 238 is axially translatable, for example, pulled in reverse against the spring 240 from the handle 246 or biased forward by the spring 240 in the direction from the second axial end 224 toward the first axial end 222. The pin 238 may be rotatable within its respective one of the pin slots 228, for example, to facilitate threaded engagement between the pin 238 and the rotational equipment component 234. The pin 238 may also be circumferentially moveable (relative to the axis 220) within its respective one of the pin slots 228, for example, to facilitate circumferential alignment of the pin 238 with apertures 250 of the rotational equipment component 234.

In operation to apply a counter-moment force to the rotational equipment component 234, the anti-rotation tool 200 may be positioned with the flange facing surface 226 abutting the flange facing surface 236. In this position, contact between the flange facing surface 236 and the pin 238 of one or more of the pin assemblies 206 may bias the pin 238 against the force of the spring 240. The pin 238 of each of the pin assemblies 206 may be aligned with a respective one of the apertures 250 of the rotational equipment component 234 along the flange facing surface 236. When aligned, the biasing force of the spring 240 may bias the pin 238 into the respective one of the apertures 250. Additionally or alternatively, the pin 238 may be threaded into the respective one of the apertures 250. As shown in FIG. 8, the pin 238 of a first of the pin assemblies 206 is engaged with the rotational equipment component 234 and the pin 238 of a second of the pin assemblies 206 is retracted from the rotational equipment component 234. Once the anti-rotation tool 200 has been securely engaged with the rotational equipment component 234 the anti-rotation tool 200 may be restrained while mechanical fasteners (see FIGS. 3 and 4) of the rotational equipment component 234 are installed or removed, as will be discussed in further detail.

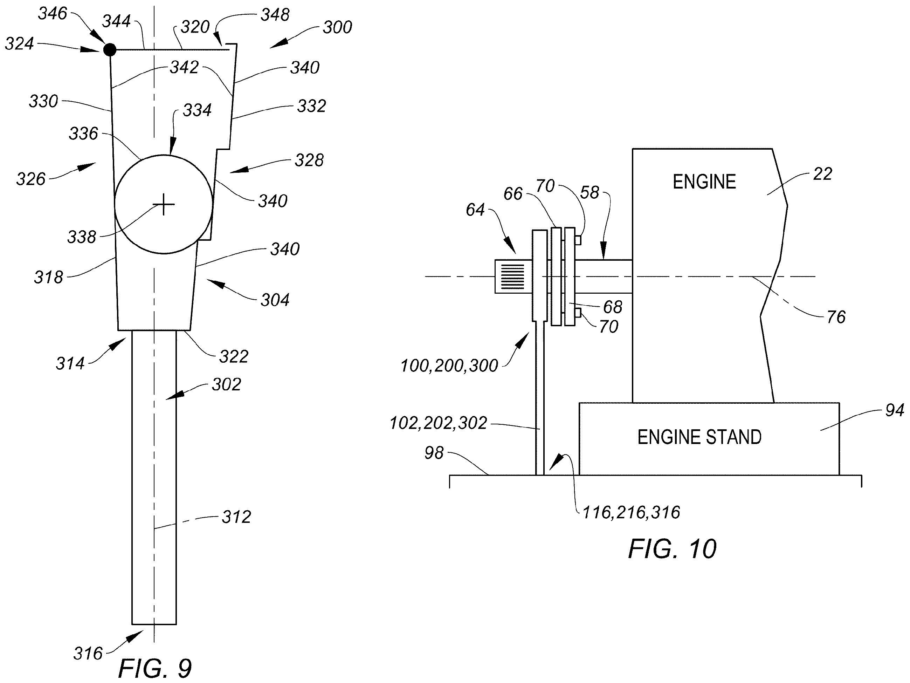

FIG. 9 schematically illustrates another anti-rotation tool 300. The anti-rotation tool 300 may be used to apply a counter-moment force to rotational equipment to facilitate maintenance, testing, inspection, or overhaul procedures such as, but not limited to, those described above. The anti-rotation tool 300 of FIG. 9 includes a shaft 302 and a head 304.

The shaft 302 extends along an axis 312 of the anti-rotation tool 300 between and to a proximal axial end 314 of the shaft 302 and a distal axial end 316 of the shaft 302. The shaft 302 may be the same as or similar to the shaft 102 (see FIG. 5) described above and, for the sake of brevity, will not be further described.

The head 304 includes a head body 318 and a flap 320. The head body 318 is disposed at (e.g., on, adjacent, or proximate) the proximal axial end 314. The head body 318 may be fixedly mounted to the shaft 302. The head body 318 may be formed as a unitary component with the shaft 302. The head body 318 may alternatively be configured for selective attachment to the shaft 302 to facilitate installation of different configurations of the head 304, for example, to accommodate different shapes, sizes, and configurations of rotational equipment.

The head body 318 extends along the axis 312 between and to a proximal axial end 322 of the head body 318 and a distal axial end 324 of the head body 318. The proximal axial end 322 is disposed at the shaft 302 (e.g., the proximal axial end 314). The head body 318 extends laterally (e.g., orthogonal to the axial direction) between and to a first lateral side 326 of the head body 318 and a second lateral side 328 of the head body 318. The head body 318 includes a first lateral panel 330 (e.g., a plate) and a second lateral panel 332 (e.g., a plate). The first lateral panel 330 extends on the first lateral side 326 from the proximal axial end 322 to the distal axial end 324. The first lateral panel 330 diverges radially outward from the axis 312 in a direction from the proximal axial end 322 to the distal axial end 324. The second lateral panel 332 extends on the second lateral side 328 from the proximal axial end 322 to the distal axial end 324. The second lateral panel 332 includes a plurality of stepped axial portions 340. Each of the stepped axial portions 340 is disposed radially outward of each preceding one of the stepped axial portions 340 in a direction from the proximal axial end 322 to the distal axial end 324. Each of the stepped axial portions 340 diverges radially outward from the axis 312 in a direction from the proximal axial end 322 to the distal axial end 324. The head body 318 of FIG. 9 includes three stepped axial portions 340; however, the present disclosure anti-rotation tool 300 is not limited to any particular quantity of stepped axial portions 340. The first lateral panel 330 and the second lateral panel 332 are configured to engage a rotational equipment component 334, for example, an outer diameter surface 336 of the rotational equipment component 334 extending circumferentially about a rotational axis 338 of the rotational equipment component 334. The head body 318 is open between the first lateral panel 330 and the second lateral panel 332, for example, along the rotational axis 338. The head 304 may include a resilient material liner 342 on internal surfaces of the first lateral panel 330 and the second lateral panel 332, for example, to facilitate improved grip on the rotational equipment component 334. The resilient material liner 342 may include a resilient material such as a dense rubber or other elastomeric material.

The flap 320 includes a flap panel 344 extending between and to a first end 346 of the flap panel 344 and a second end 348 of the flap panel 344. The flap panel 344 is pivotably mounted to the head body 318. As shown in FIG. 9, for example, the first end 346 may be pivotably mounted to the first lateral panel 330 at (e.g., on, adjacent, or proximate) the distal axial end 324. The flap panel 344 may be selectively engageable with the second lateral panel 332 at (e.g., on, adjacent, or proximate) the second end 348, for example, to laterally secure the first lateral panel 330 to the second lateral panel 332 along the distal axial end 324.

In operation to apply a counter-moment force to the rotational equipment component 334, the head 304 may be pushed onto the outer diameter surface 336 until the outer diameter surface 336 is securely positioned (e.g., wedged) between the first lateral panel 330 and the second lateral panel 332. As the head 304 is pushed onto the outer diameter surface 336, the rotational equipment component 334 may push the flap panel 344 to pivot into the head body 318. This configuration of the head 304 and its flap panel 344 facilitates installation of the head 304 on rotational equipment components where axial ends (e.g., relative to the component rotational axis) of the rotational equipment components may not be accessible. Once the anti-rotation tool 300 has been securely engaged with the rotational equipment component 334 the anti-rotation tool 300 may be restrained while mechanical fasteners (see FIGS. 3 and 4) of the rotational equipment component 334 are installed or removed, as will be discussed in further detail.

FIG. 10 schematically illustrates an exemplary system wherein the anti-rotation tool 100, 200, 300 is used to facilitate installation of the adapter 64 on the output shaft 58 of the engine 22 (e.g., the gear train 54; see FIGS. 2 and 3). The engine 22 of FIG. 9 is mounted on an engine stand 94; however, the present disclosure is not limited to the use of the engine stand 94 or other fixturing to facilitate aspects of the present disclosure. The anti-rotation tool 100, 200, 300 may be installed on and rotationally fixed to the adapter 64 as discussed above with respect to the rotational equipment component 134, 234, 334. With the anti-rotation tool 100, 200, 300 installed on the adapter 64, the anti-rotation tool 100 may be fixed to facilitate anti-rotation of the adapter 64 about the rotational axis 76. For example, the shaft 102, 202, 302 may be held by a technician as the bolts 70 are installed to mount the adapter 64 (e.g., the flange 66) to the output shaft 58 (e.g., the flange 68). Alternatively, the shaft 102, 202, 302 may be fixedly positioned in contact with the ground 96. For example, the length 118 of the shaft 102, 202, 302 may be extended (e.g., using the first shaft portion 120, the second shaft portion 122, and the locking pin 124) until the distal axial end 116, 216, 316 is securely positioned on the ground 96 (see FIG. 5). Alternatively, the shaft 102, 202, 302 may be fixedly positioned using any other fixed structure. In this condition of the anti-rotation tool 100, 200, 300, the bolts 70 may be installed into the assembly of the adapter 64 and the output shaft 58 while the anti-rotation tool 100, 200, 300 applies a counter-moment force to the adapter 64 to prevent rotation of the adapter 64 and the output shaft 58 as the bolts 70 are installed.

While the principles of the disclosure have been described above in connection with specific apparatuses and methods, it is to be clearly understood that this description is made only by way of example and not as limitation on the scope of the disclosure. Specific details are given in the above description to provide a thorough understanding of the embodiments. However, it is understood that the embodiments may be practiced without these specific details.

It is noted that the embodiments may be described as a process which is depicted as a flowchart, a flow diagram, a block diagram, etc. Although any one of these structures may describe the operations as a sequential process, many of the operations can be performed in parallel or concurrently. In addition, the order of the operations may be rearranged. A process may correspond to a method, a function, a procedure, a subroutine, a subprogram, etc.

The singular forms "a," "an," and "the" refer to one or more than one, unless the context clearly dictates otherwise. For example, the term "comprising a specimen" includes single or plural specimens and is considered equivalent to the phrase "comprising at least one specimen." The term "or" refers to a single element of stated alternative elements or a combination of two or more elements unless the context clearly indicates otherwise. As used herein, "comprises" means "includes." Thus, "comprising A or B," means "including A or B, or A and B," without excluding additional elements.

It is noted that various connections are set forth between elements in the present description and drawings (the contents of which are included in this disclosure by way of reference). It is noted that these connections are general and, unless specified otherwise, may be direct or indirect and that this specification is not intended to be limiting in this respect. Any reference to attached, fixed, connected, or the like may include permanent, removable, temporary, partial, full and/or any other possible attachment option.

The terms "substantially," "about," "approximately," and other similar terms of approximation used throughout this patent application are intended to encompass variations or ranges that are reasonable and customary in the relevant field. These terms should be construed as allowing for variations that do not alter the basic essence or functionality of the invention. Such variations may include, but are not limited to, variations due to manufacturing tolerances, materials used, or inherent characteristics of the elements described in the claims and should be understood as falling within the scope of the claims unless explicitly stated otherwise.

No element, component, or method step in the present disclosure is intended to be dedicated to the public regardless of whether the element, component, or method step is explicitly recited in the claims. No claim element herein is to be construed under the provisions of 35 U.S.C. 112(f) unless the element is expressly recited using the phrase "means for." As used herein, the terms "comprise", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

While various inventive aspects, concepts and features of the disclosures may be described and illustrated herein as embodied in combination in the exemplary embodiments, these various aspects, concepts, and features may be used in many alternative embodiments, either individually or in various combinations and sub-combinations thereof. Unless expressly excluded herein all such combinations and sub-combinations are intended to be within the scope of the present application. Still further, while various alternative embodiments as to the various aspects, concepts, and features of the disclosures--such as alternative materials, structures, configurations, methods, devices, and components, and so on--may be described herein, such descriptions are not intended to be a complete or exhaustive list of available alternative embodiments, whether presently known or later developed. Those skilled in the art may readily adopt one or more of the inventive aspects, concepts, or features into additional embodiments and uses within the scope of the present application even if such embodiments are not expressly disclosed herein. For example, in the exemplary embodiments described above within the Detailed Description portion of the present specification, elements may be described as individual units and shown as independent of one another to facilitate the description. In alternative embodiments, such elements may be configured as combined elements.

## Claims

1. An anti-rotation tool (100) comprising:
a shaft (102) extending between and to a proximal shaft end (114) and a distal shaft end (116);
a head (104) extending between and to an inner head end (126) and an outer head end (128), the inner head end (126) disposed at the proximal shaft end (114), the head (104) forming a cradle (130) along the outer head end (128), the cradle (130) forming a component mating surface (132);
a roller band (106) extending between and to a proximal band end (138) and a distal band end (140), the proximal band end (138) fixedly mounted to the head (104), the roller band (106) including a first lateral chain (146), a second lateral chain (148), a plurality of pins (150), and a plurality of rollers (152), the plurality of pins (150) distributed along the roller band (106) from the proximal band end (138) to the distal band end (140), each of the plurality of pins (150) extending between and to the first lateral chain (146) and the second lateral chain (148), each of the plurality of rollers (152) rotatably mounted on a respective one of the plurality of pins (150) between the first lateral chain (146) and the second lateral chain (148), the plurality of rollers (152) forming a component mating interface (162); and
a locking device (108) positionable in a locked condition or an unlocked condition with the roller band (106), the locking device (108) in the locked condition fixing a portion of the roller band (106) between the proximal band end (138) and the distal band end (140).

2. The anti-rotation tool (100) of claim 1, wherein each of the plurality of pins (150) extends laterally between and to a first lateral end (156) and a second lateral end (158), the first lateral end (156) is disposed laterally outside of the first lateral chain (146), the second lateral end (158) is disposed laterally outside of the second lateral chain (148), and the locking device (108) includes a hook (164) operable to engage a selected one of the plurality of pins (150) at the first lateral end (156) and the second lateral end (158),
wherein, optionally, the hook (164) is pivotably mounted to the shaft (102).

3. The anti-rotation tool (100) of claim 1 or 2, wherein the shaft (102) has a length (118) between the proximal shaft end (114) and the distal shaft end (116), and the shaft (102) is adjustable to selectively vary the length (118).

4. The anti-rotation tool (100) of claim 1, 2 or 3, wherein the head (104) includes a resilient material liner (136) forming the mating surface (132).

5. The anti-rotation tool (100) of any preceding claim, wherein the mating surface (132) is a concave surface.

6. The anti-rotation tool (100) of any preceding claim, wherein each of the plurality of rollers (152) includes a resilient roller material.

7. The anti-rotation tool (100) of any preceding claim, further comprising a friction arm (110), the friction arm (110) extending between and to a proximal arm end (166) and a distal arm end (168), the proximal arm end (166) pivotably mounted to the head (104), the friction arm (110) is pivotable between an engaged position and a retracted position, the distal arm end (168) contacts the roller band (106) in the engaged position of the friction arm (110), and the friction arm (110) is separated from the roller band (106) in the retracted position of the friction arm (110).

8. A system for preventing rotation of a first rotational equipment component (58; 80) of an aircraft engine (22; 78), the system comprising:
the first rotational equipment component (58; 80) mounted for rotation about a rotational axis (76; 82);
a second rotational equipment component (64; 90; 134; 234; 334) mounted on the first rotational equipment component (58; 80), the second rotational equipment component (64; 90; 134; 234; 334) axially adjacent the first rotational equipment component (58; 80), the second rotational equipment component (64; 90; 134; 234; 334) mounted to the first rotational equipment component (58; 80) by a plurality of mechanical fasteners (70; 92) to form a rotational assembly of the first rotational equipment component (58; 80) and the second rotational equipment component (64; 90); and
an anti-rotation tool (100; 200; 300) including a shaft (102; 202; 302) and a head (104; 204; 304), the shaft (102; 202; 302) extending along a shaft axis (112; 212; 312) between and to a proximal shaft end (114; 214; 314) and a distal shaft end (116; 216; 316), the head (104; 204; 304) fixedly coupled with the rotational assembly with the shaft axis (112; 212; 312) oriented orthogonal to the rotational axis (76; 82), the shaft (102; 202; 302) rotationally fixed relative to the rotational axis (76; 82).

9. The system of claim 8, wherein the anti-rotation tool (100) further includes a roller band (106) and a locking device (108),
the roller band (106) extends between and to a proximal band end (138) and a distal band end (140), the proximal band end (138) is fixedly mounted to the head (104), the roller band (106) includes a first lateral chain (146), a second lateral chain (148), a plurality of pins (150), and a plurality of rollers (152), the plurality of pins (150) are distributed along the roller band (106) from the proximal band end (138) to the distal band end (140), each of the plurality of pins (150) extends between and to the first lateral chain (146) and the second lateral chain (148), each of the plurality of rollers (152) rotatable mounted on a respective one of the plurality of pins (150) between the first lateral chain (146) and the second lateral chain (148), the plurality of rollers (152) forms a component mating interface (162) in contact with the rotational assembly, and
the locking device (108) is positioned in a locked condition with the roller band (106) such that the rotational assembly is disposed between and contacting the component mating interface (162) and the head (104).

10. The system of claim 8, wherein:
the head (204) forms a first flange facing surface (226) and a plurality of pin slots (228) extending through the first flange facing surface (226), the first flange facing surface (226) is oriented orthogonal to a flange axis, the plurality of pin slots (228) are distributed circumferentially about the flange axis, and the first flange facing surface (226) is disposed on a second flange facing surface (236) of the rotational assembly; and
the anti-rotation tool (200) further includes a plurality of pin assemblies (206), each of the plurality of pin assemblies (206) includes a pin (238) and a spring (240), the pin (238) is disposed within a respective one of the plurality of pin slots (228), the pin (238) is axially translatable within the respective one of the plurality of pin slots (228) with respect to the flange axis, the spring (240) is positioned between the pin (238) and the head (204) and configured to bias the pin (238) axially outward from the head (204) at the first flange facing surface (226), and the pin (238) of each of the pin assemblies (206) is engaged with the rotational assembly at the second flange facing surface (236).

11. The system of claim 8, wherein the head (304) includes a head body (318) and a flap (320),
the head body (318) extends along the shaft axis (312) between and to a proximal head end (322) and a distal head end (324), the proximal head end (322) is disposed at the shaft (302), the head body (318) includes a first lateral panel (330) and a second lateral panel (332) extending between and to the proximal head end (322) and the distal head end (324), the first lateral panel (330) diverges radially outward from the shaft axis (312) in a direction from the proximal head end (322) to the distal head end (324), the second lateral panel (332) includes a plurality of stepped axial portions (340), each of the plurality of stepped axial portions (340) diverges radially outward from the shaft axis (312) in the direction from the proximal head end (322) to the distal head end (324), and
the flap (320) extends between and to a first flap end (346) and a second flap end (348), the first flap end (346) is pivotably mounted to the first lateral panel (330) at the distal head end (324), and the flap (320) is operable to contact the second lateral panel (332) at the second flap end (348).

12. The system of any of claims 8 to 11, wherein the shaft (102; 202; 302) is positioned in contact with a ground (96) rotationally fixing the shaft (102; 202; 302) relative to the rotational axis (76; 82).

13. The system of any of claims 8 to 12, wherein the first rotational equipment component is an output shaft (58) of the aircraft engine (22), the output shaft (58) includes an output shaft flange (68), the second rotational equipment component is a dynamometer adapter (64), the dynamometer adapter (64) includes an adapter flange (66) disposed axially adjacent the output shaft flange (68) relative to the rotational axis (76), and the plurality of mechanical fasteners (70) couple the output shaft flange (68) with the adapter flange (66).

14. The system of any of claims 8 to 12, wherein the first rotational equipment component is a propulsor rotor (80) of the aircraft engine (78), the second rotational equipment component is a nose cone (90), the nose cone (90) is disposed axially adjacent the propulsor rotor (80) relative to the rotational axis (82), and the plurality of mechanical fasteners (92) couple the nose cone (90) with the propulsor rotor (80).

15. A method for applying a counter moment force to a freely-rotatable component (58) installed on an aircraft engine (22) while installing or removing a threaded mechanical fastener (70) from the freely-rotatable component (58), the method comprising:
installing an anti-rotation tool (100; 200; 300) on the freely-rotatable component (58) rotatable about a rotational axis (76) with a head (104; 204; 304) of the anti-rotation tool (100; 200; 300) fixedly coupled with the freely-rotatable component (58);
rotationally fixing the anti-rotation tool (100; 200; 300) relative to the rotational axis (76) by positionally fixing a shaft (102; 202; 302) of the anti-rotation tool (100; 200; 300) connected to the head (104; 204; 304); and
applying a counter moment force to the freely-rotatable component (58) with the anti-rotation tool (100; 200; 300), rotationally fixed relative to the rotational axis (76), while installing or removing the threaded mechanical fastener (70) from the freely-rotatable component (58) by rotating the threaded mechanical fastener (70) about a fastener axis substantially parallel to the rotational axis (76),
wherein, optionally:
the shaft (102; 202; 302) extends along a shaft axis (112; 212; 312) between a proximal shaft end (114; 214; 314) and a distal shaft end (116; 216; 316), the proximal shaft end (114; 214; 314) is disposed at the head (104; 204; 304), and the shaft axis (112; 212; 312) is orthogonal to the rotational axis (76), and, optionally, the shaft (102; 202; 302) has a length (118) between the proximal shaft end (114; 214; 314) and the distal shaft end (116; 216; 316), and the shaft (102; 202; 302) is adjustable to selectively vary the length (118), and, further optionally, rotationally fixing the anti-rotation tool (100;
200; 300) relative to the rotational axis (76) by positionally fixing the shaft (102; 202; 302) includes increasing the length (118) to position the distal shaft end (116; 216; 316) in fixed contact with a ground (96); and/or
the freely-rotatable component is an engine shaft (58) of the aircraft engine (22).
